(19) Europäisches Patentamt
European Patent Office
Office européen des brevets

(11) **EP 4 332 625 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(51) Internationale Patentklassifikation (IPC):
**G01S 13/74** *(2006.01)*    **G01S 13/08** *(2006.01)*
**G01S 7/00** *(2006.01)*

(21) Anmeldenummer: **23156116.8**

(22) Anmeldetag: **10.02.2023**

(52) Gemeinsame Patentklassifikation (CPC):
**G01S 13/74; G01S 7/003; G01S 11/00; G01S 13/08**

(54) **VERFAHREN ZUR BILDUNG EINER AUTOKORRELATIONSMATRIX VON MESSWERTEN AN FUNKSIGNALEN ZUR ENTFERNUNGSMESSUNG UND RAUSCHREDUKTION**

METHOD FOR FORMING AN AUTOCORRELATION MATRIX OF MEASURED VALUES OF RADIO SIGNALS FOR DISTANCE MEASUREMENT AND NOISE REDUCTION

PROCÉDÉ DE FORMATION D'UNE MATRICE D'AUTOCORRÉLATION DE VALEURS DE MESURE SUR DES SIGNAUX RADIO POUR TÉLÉMÉTRIE ET RÉDUCTION DE BRUIT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **16.05.2022 PCT/EP2022/063154**

(43) Veröffentlichungstag der Anmeldung:
**06.03.2024 Patentblatt 2024/10**

(73) Patentinhaber: **Lambda: 4 Entwicklungen GmbH**
**22299 Hamburg (DE)**

(72) Erfinder: **REIMANN, Rönne**
**22299 Hamburg (DE)**

(74) Vertreter: **Raffay & Fleck**
**Patentanwälte**
**Stephansplatz 2-6**
**20354 Hamburg (DE)**

(56) Entgegenhaltungen:
**WO-A1-2022/096509**

**Beschreibung**

Die Erfindung betrifft die Auswertung von Eigenschaften einer Signalausbreitung von Funksignalen, insbesondere die Bestimmung der Entfernung und/oder die Bereitstellung von mathematischen Objekten, die aus Messwerten an Funksignalen gewonnen werden, für Bestimmung der Eigenschaften der Signalausbreitung.

Es ist bekannt, aus komplexen Messwerten eine Autokorrelationsmatrix zu erzeugen und zumindest einen Teil deren Eigenwerte und/oder Eigenvektoren zu bestimmen um Eigenschaften der Signalausbreitung, wie die zurückgelegte Entfernung und/oder die Einfallsrichtung des Signals zu bestimmen. Dazu wird sich weitläufig eines der Verfahren namens MUSIC, CAPON's method oder MATRIX PENCIL bedient.

Auch ist es aus der WO 2022/096509 A1 bekannt, aus Laufzeitmessungen komplexe Werte zu berechnen und diese in Verfahren wie MUSIC, CAPON's method oder MATRIX PENCIL zu nutzen.

Es ist ferner bekannt, mittels spatial smoothing einen Messwertraum zu reduzieren sowie aus einer Autokorrelationsmatrix von Messwerten an empfangenen Funksignalen, ob mit oder ohne spatial smoothing erzeugt, eine Entfernung zu bestimmen, die ein Funksignal zwischen zwei Objekten zurückgelegt hat.

Für das spatial smoothing werden aus einer Messwertmatrix der Dimension f x a und somit z. B. a Antennenmesswertvektoren mit Messwerten bei einer zumindest näherungsweise einheitlichen Frequenz aber a unterschiedlichen Antennenpfaden und f Frequenzmesswertvektoren mit Messwerten bei f unterschiedlichen Frequenzen jeweils eines Antennenpfades, Unterraummatrizen mit der Größe g x a gebildete, mit g < f. Die Anzahl der Unterraummatrizen beträgt dabei (f - g + 1)

Die Unterraummatrizen U(j) mit j = 1 ... (f - g + 1) werden dann wie folgt gebildet: U(j) ist gebildet aus den Frequenzmesswertvektoren j bis g + j - 1 der Messwertmatrix in der Reihenfolge der Frequenzmesswertvektoren in der Messwertmatrix. Die Unterraummatrizen werden sodann jeweils mit sich selbst korreliert. Die autokorrelierten Unterraummatrizen werden anschließend zur Bildung der Autokorrelationsmatrix aufsummiert. Dabei sind g, a, f und j ganze positive Zahlen. Insbesondere ist durch das Ergebnis der Aufsummierung die Autokorrelationsmatrix gegeben.

Die Autokorrelationsmatrix kann dann verwendet werden, um bekannte Verfahren zur Behandlung von Autokorrelationsmatrizen von Messwerten anzuwenden, beispielsweise um Rauschanteile zu reduzieren und/oder Testvektoren mit der Autokorrelationsmatrix, ihrer Inversen oder Ihrem Eigenvektorraum zu multiplizieren. Dazu wird sich weitläufig eines der Verfahren namens MUSIC, CAPON's method, oder MATRIX PENCIL bedient.

Auch ist es aus "An Improved Spatial Smoothing Technique for DoA Estimation of Highly Correlated Signals", Avi Abu, Engineering Letters, 19:1, EL_19_1_02 (Advance online publication: 10 February 2011) bekannt, die Eigenwerte der ansonsten für das spatial smoothing verwendeten Unterraummatrizen direkt zur Bestimmung des Einfallswinkels mittels MUSIC zu verwenden ohne die Unterraummatrizen zuvor aufzusummieren.

Aufgabe ist es, eine verbesserte Herleitung einer Autokorrelationsmatrix anzugeben, die die Größe der Autokorrelationsmatrix kleiner ausfallen lässt und dennoch möglichst genaue Auswertungen erlaubt. Dabei kann durch die Auswahl der Anzahl der Unterraummatrizen auch bei gegebener Größe der AKM der Rechenaufwand relativ frei gewählt werden und bei geringer Anzahl der Rechenaufwand deutlich reduziert, bei hoher Anzahl die Genauigkeit der aus der Autokorrelationsmatrix abgeleiteten Angaben sogar gegenüber dem Stand der Technik gesteigert werden. Dabei sind dann aber zu große Rundungsfehler in der Berechnung zu vermeiden.

Gelöst wird die Aufgabe durch ein Verfahren zur Bestimmung mindestens einer Entfernung wobei es die Bereitstellung einer Autokorrelationsmatrix von Messwerten an Funksignalen zwischen einem ersten und einem zweiten Objekt zur Bestimmung mindestens einer Eigenschaft der Signalausbreitung der Funksignale zwischen erstem und zweitem Objekt, insbesondere der Entfernung, die die Funksignale zurückgelegt haben und/oder zwischen erstem und zweitem Objekt umfasst, wobei

a. f, insbesondere komplexe, Messwertvektoren, insbesondere Frequenzmesswertvektoren, mit je a Koordinaten mit a >= 1 und mit f > 1, insbesondere mit f > 3, insbesondere f > 10, mit einer gegeben Reihenfolge, insbesondere als eine komplexe Messwertmatrix, insbesondere mit f Zeilen und a Spalten oder f Spalten und a Zeilen, bereitgestellt werden, die insbesondere einen Messwertraum aufspannen und wobei aus der Menge der Messwertvektoren, insbesondere Messwertmatrix mittels spatial smoothing eine Autokorrelationsmatrix mit Vektoranzahl niedriger als f, insbesondere mit geringerer Spalten- und/oder Zeilenanzahl als die der Messwertmatrix gebildet wird, wobei

b. für die Durchführung des spatial smoothing eine Mehrzahl von Unterraummatrizen mit jeweils einer Messwertvektoranzahl, insbesondere Spalten- oder Zeilenvektoranzahl, geringer als f, insbesondere geringerer Spalten- und/oder Zeilenanzahl als die der Messwertmatrix, gebildet wird und wobei die Unterraummatrizen jeweils mit sich selbst korreliert werden und die mit sich selbst korrelierten Unterraummatrizen, insbesondere gewichtet, aufsummiert werden, dadurch gekennzeichnet, dass die Bildung der Unterraummatrizen so erfolgt, dass

c. jeweils eine Auswahl mit für alle Unterraummatrizen gleicher Anzahl in der Reihenfolge zumindest teilweise jeweils, insbesondere jeweils, nicht benachbarter Messwertvektoren, insbesondere Zeilen oder Spalten der Messwertmatrix, eine Unterraummatrix bildet

und/oder dass

eine erste Teilmenge der Unterraummatrizen so gebildet wird, dass eine Unterraummatrix der ersten Teilmenge jeweils durch eine Auswahl mit für alle Unterraummatrizen gleicher Anzahl Messwertvektoren, insbesondere Zeilen oder Spalten der Messwertmatrix, gebildet wird, wobei die Anordnung der ausgewählten Messwertvektoren in der Unterraummatrix ist wie in der Reihenfolge und dass eine zweite Teilmenge der Unterraummatrizen so gebildet wird, dass eine Unterraummatrix der zweiten Teilmenge jeweils durch eine Auswahl mit für alle Unterraummatrizen gleicher Anzahl modifizierter Messwertvektoren aus einer modifizierten Messwertvektorenmenge, insbesondere modifizierten Messwertmatrix, gebildet wird und dass die modifizierte Messwertvektorenmenge, insbesondere modifizierte Messwertmatrix, dadurch gebildet ist, dass Messwertvektoren ausgewählt und ihre Reihenfolge umgedreht wird und der komplexe oder der reale Anteil aller Koordinaten der modifizierten Messwertvektorenmenge invertiert wird, wobei die Anordnung der ausgewählten Messwertvektoren in den Unterraummatrix der zweiten Teilmenge jeweils der umgedrehten Reihenfolge entspricht. Insbesondere werden immer nur entweder der komplexe oder der reale Anteil einer Koordinate invertiert wird

Ein Messwertvektor, der insbesondere durch einen Frequenzmesswertvektor gegeben ist, ist insbesondere jeweils gebildet aus zumindest a, insbesondere genau a, insbesondere komplexen, Messwerten an an einem zweiten Objekt empfangenen Signalen eines ersten Objekts oder an einem ersten Objekt empfangenen Signalen eines zweiten Objekts, bei zumindest näherungsweise identischen Frequenzen über a Antennenpfade. Verschiedene Frequenzmesswertvektoren unterscheiden sich insbesondere durch unterschiedliche, also insbesondere nicht näherungsweise identische Frequenzen der Signale, an denen ihre Messwerte genommen wurden.

Eine Messwertmatrix weist dabei insbesondere als Spalten bzw. Zeilenvektoren Frequenzmesswertvektoren und Antennenmesswertvektoren auf.

Ein Antennenmesswertvektor ist insbesondere jeweils gebildet aus zumindest f, insbesondere genau f, insbesondere komplexen, Messwerten an an einem zweiten Objekt empfangenen Signalen eines ersten Objekts oder an einem ersten Objekt empfangenen Signalen eines zweiten Objekts, bei f unterschiedlichen Frequenzen über einen gemeinsamen Antennenpfad. Verschiedene Antennenmesswertvektoren unterscheiden sich insbesondere durch den zur Generierung ihrer Messwerte verwendeten Antennenpfad. Ein Antennenpfad ist insbesondere durch die Übertragung von einer ersten sendenden Antenne zu einer ersten empfangenen Antenne gegeben. Unterschiedliche Antennenpfade unterscheiden sich insbesondere dadurch, dass sie unterschiedliche sendende Antennen und/oder unterschiedliche empfangenen Antennen zur Übertragung nutzen.

Unter einer gegebenen Reihenfolge ist insbesondere zu verstehen, dass eine Reihenfolge bestimmt ist oder wird und somit die Vektoren in einer Reihenfolge zueinander stehen oder diese bekannt ist und nicht eine unsortierte Menge von Vektoren bilden. Die Reihenfolge kann willkürlich festgelegt werden.

In den Messwertvektoren, insbesondere Zeilen- oder Spaltenvektoren, sind insbesondere die Messwerte, an einem Funksignal oder Funksignalrundlauf als Werte enthalten, insbesondere als deren Koordinaten. Die Anzahl der Werte oder Koordinaten in einem Vektor kann beispielsweise der Anzahl der Antennenpfade entsprechen. Darunter ist insbesondere die Anzahl der unterschiedlichen Kombinationen von verwendeten Empfang- uns Sendeantennen zu verstehen. Die Anzahl der Messwerte und/oder Koordinaten im Frequenzmesswertvektoren kann auch eins betragen, ist aber insbesondere größer gleich zwei. Die Reihenfolge kann durch die Anordnung in einer Matrix gegeben sind, aber auch davon getrennt durch eine vorgegebene Reihenfolge und/oder durch eine Nummerierung, Indizierung oder anderes der Messwertvektoren.

In der Regel sind die Messwerte komplex. Dies Messwerte sind insbesondere jeweils gegeben durch einen von der empfangenen Amplitude abhängigen Wert (r), wie beispielsweise eine normierte Amplitude, eine Energie oder Leistung, insbesondere als Betrag, und einem Phasenwert (phi), wobei dieser insbesondere die Phasenverschiebung durch die Signalübertragung vom ersten zum zweiten Objekt oder des Signalrundlaufs zwischen den zwei Objekten. Ein Messwert kann dann beispielsweise als $r * e^{j * phi}$ dargestellt sein. Die Messwerte können auch vorverarbeitet sein, so kann beispielsweise der Phasenwert erst berechnet sein oder eine Mittelung von Messungen an mehreren Signalen bei der gleichen Frequenz sein. Dabei kann der Phasenwert auch eine aus der Signallaufzeit berechnete durch die Entfernung zwischen dem ersten und zweiten Objekt bedingte Phasenänderung sein. Auf Basis der Laufzeit und der Frequenz kann eine äquivalente Phasenänderung berechnet werden.

Unter Übertragung ist insbesondere das Aussenden eines Signals von einer Sendevorrichtung, insbesondere Antenne, des ersten Objekts und das empfangen des Signals mit einer Empfangsvorrichtung, insbesondere Antenne, des zweiten Objekts sowie insbesondere das Aussenden eines Signals von einer Sendevorrichtung, insbesondere Antenne, des zweiten Objekts und das empfangen des Signals mit einer Empfangsvorrichtung, insbesondere Antenne, des ersten Objekts zu verstehen. Eine Sendevorrichtung kann auch als Empfangsvorrichtung verwendet werden und weist insbesondere eine Antenne auf und/oder ist durch eine solche gegeben.

Unter dem Aussenden einer Mehrzahl von Funksignalen und dem Empfangen dieser ist zu verstehen, dass Funksignale ausgesendet werden und zumindest eine Mehrzahl dieser Funksignale empfangen wird. Dies schließt nicht aus, dass mehr als die Mehrzahl von Funksignalen gesendet aber nur die Mehrzahl empfangen wird.

Bei der Bildung der Unterraummatrizen wird immer nur ein Teil der Messwertvektoren, also insbesondere entweder Spalten oder Zeilen der Messwertmatrix, ausgewählt und in die Unterraummatrix geschrieben. Dadurch ist deren Größe gegenüber der Messwertmatrix reduziert. Die Auswahl zur Bildung der modifizierten Messwertvektorenmenge kann aber auch alle Messwertvektoren beinhalten, insbesondere beinhaltet sie aber zumindest solche nicht, die zur Bildung der Unterraummatrizen der ersten Teilmenge verwendet wurden. Bei der Invertierung der komplexe oder der reale Anteil aller Koordinaten der modifizierten Messwertvektorenmenge kommt es darauf an, dass immer nur der komplexe oder der reale Anteil, nicht beide, invertiert werden. Dabei wird die Invertierung insbesondere bei allen ausgewählten Messwertvektoren identisch durchgeführt.

Die Anzahl der Unterraummatrizen kann anhand der gewünschten Genauigkeit, der Genauigkeit der verwendeten Recheneinheit und der verfügbaren Rechenzeit gewählt werden. Sie kann kleiner, gleich oder Größer der Anzahl der Messwertvektoren sein. Je geringer sie gewählt wird, desto weniger Rechenleistung wird benötigt.

Insbesondere wird ihre Größe so gewählt, dass sie 10 bis 50 x Anzahl der betrachteten Antennenpfade beträgt. Es reicht auch aus, nur einen Antennenpfad zu wählen und es die Antennenpfade auch jeweils einzeln oder aufgeteilt betrachtet werden, so dass auch Unterraummatrizen mit z.B.: einer Größe von 10 bis 50 x 1 möglich sind.

In einigen Anwendungsfällen, insbesondere bei der Arbeit mit CAPON's method bzw. der Inversen der Autokorrelationsmatrix ist es sinnvoll, die Anzahl der Unterraummatrizen nicht wesentlich geringer oder nicht geringer zu wählen als die Anzahl der Koordinaten der Unterraummatrix für jeweils einen Antennenpfad, insbesondere nicht geringer zu wählen als 75% der Anzahl.

Die Aufsummierung der Unterraummatrizen kann gewichtet, insbesondere nach Basis der Güte des Empfangs der in ihr enthaltenen Messwertvektoren, Frequenzmesswertvektoren und/oder Antennenmesswertvektoren erfolgen. So kann eine Metrik der Güte als Faktor für die Gewichtung verwendet werden. Die Güte oder Metrik der Güte kann beispielsweise für jeden enthaltenen Messwertvektor bestimmt und daraus eine Metrik der Unterraummatrix abgeleitet werden, beispielsweise durch eine Aggregation, einen Mittelwert, da Minimum und/oder Maximum. Die Güte oder Metrik der Güte eines Messwertvektors kann beispielsweise dadurch bestimmt werden, dass zeitlich eng aufeinanderfolgend am gleichen Signal mehrere Messungen vorgenommen werden, die insbesondere zur Bildung des Messwerts gemittelt werden. Als Metrik der Güte kann dabei ein zur Streuung, beispielsweise Varianz oder Standardabweichung, der Messungen antiproportionaler Wert verwendet werden. Dabei kann beispielsweise die Streuung der empfangenen Amplitude, Leistung und/oder der Phasenverschiebung durch die Signalübertragung, insbesondere Entfernung, verwendet werden. Dadurch kann die Qualität der Autokorrelationsmatrix

Das Verfahren kann insbesondere im Rahmen einer oder mehrerer der folgenden Schritte eingesetzt werden: Senden einer Mehrzahl von Funksignalen auf unterschiedlichen ersten Frequenzen, insbesondere mit unterschiedlichen ersten Antennen, von einem ersten Objekt und empfangen an einem zweiten Objekt, insbesondere mit unterschiedlichen zweiten Antennen, sowie optional auch Senden einer Mehrzahl von Funksignalen auf unterschiedlichen zweiten Frequenzen, insbesondere identisch oder ähnlich zu den ersten Frequenzen, insbesondere mit unterschiedlichen, insbesondere den zweiten, Antennen, von dem zweiten Objekt und empfangen an dem ersten Objekt, insbesondere mit unterschiedlichen, insbesondere den ersten, Antennen. Dabei weisen insbesondere die einzelnen Funksignale der Mehrzahl unterschiedliche Frequenzen auf und/oder beinhaltet die Mehrzahl Funksignale mit unterschiedlichen Frequenzen. Es ist somit nicht erforderlich eine Mehrzahl von Funksignalen (mit beispielsweise gleichen Frequenzen) wiederholt auf unterschiedlichen Frequenzen zu senden.

Als Ähnlich sind Frequenzen insbesondere dann anzunehmen, wenn ihr Unterschied im Rahmen der Ungenauigkeit der verwendeten Hardware liegt.

Dies kann insbesondere in einem Frequenzhopping durchgeführt werden, bei dem beispielsweise in einem festgelegten Zeitabstand nacheinander jeweils Signale mit um einen festgelegten Frequenzabstand geänderten Frequenzen abgestrahlt werden.

Bestimmen von zur Empfangsamplitude korrespondierenden Amplitudenwerten, beispielsweise Amplitude, oder empfangene Leistung und Phasenwerten, die der Phasenverschiebung durch die Ausbreitung von einem zum anderen Objekt oder den Rundlauf, insbesondere die Entfernung zwischen den Objekten, bedingt sind.

Bestimmung von Phasenwerten jeweils zu einer Frequenz oder Frequenzspanne, insbesondere aus den ersten und/oder zweiten Frequenzen, angebend die Phasenverschiebung der Signalübertragung vom ersten zum zweiten Objekt oder durch den Signalrundlauf, insbesondere auf Grund der Entfernung zwischen den Objekten.

Erstellen einer Mehrzahl von Messwerten jeweils aus Amplitudenwert und Phasenwert, insbesondere als komplexe Zahl.

Erstellen von Messwertvektoren oder einer solche als Zeilen oder Spalten beinhaltende Messwertmatrix. Dabei sind, in den Frequenzmesswertvektoren die Komponenten der Messwertvektoren insbesondere gegeben jeweils durch einen Messwert eines Antennenpfades. Ein Frequenzmesswertvektoren ist insbesondere aus Messungen an einem oder mehreren Signalen einer ersten und/oder zweiten Frequenz gebildet. Insbesondere ist er bei einem Signallauf nur vom ersten zum zweiten Objekt durch Messungen an Signalen einer ersten Frequenz gebildet, bei einem Signalrundlauf aus Messungen an Signalen vom ersten zum zweiten Objekt bei einer ersten Frequenz und an Signalen vom zweiten zum ersten Objekt bei einer zweiten Frequenz gebildet, wobei die erste und zweite Frequenz insbesondere eine relative Abweichung von weniger als 500 kHz, insbesondere weniger als 100 kHz, aufweisen, insbesondere identisch sind. Insbesondere werden die Frequenzen so ähnlich gewählt, dass das Produkt aus Zeitungenauigkeit der Bestimmung des Messzeitpunkts des Messwertes mit der Frequenzdifferenz weniger als 0,05 beträgt, was einem Phasenjitter von 18° entsprechen würde.

Als Funksignale kommen insbesondere Signale mit einer konstanten Frequenz, insbesondere continuous wave, in Frage. Auf ihnen können auch Daten aufmoduliert sein. Mit den Messwertvektoren kann dann die AKM erstellt werden.

Die Unterraummatrizen können jeweils durch Auswahl von Messwertvektoren, insbesondere Frequenzmesswertvektoren, und Übernahme dieser in die jeweilige Unterraummatrix gebildet werden. Dazu wird in der Regel ein einheitliches Schema verwendet, das insbesondere für jede Auswahl in jeder Unterraummatrix, zumindest einer Teilmenge, identisch ist. Wird mit mehreren, insbesondere zwei, Teilmengen der Unterraummatrizen gearbeitet, ist die Auswahlregel in den beiden Teilmengen insbesondere ähnlich, identisch oder spiegelbildlich.

Insbesondere erfolgt die Auswahl der Messwertvektoren für die Unterraummatrizen jeweils dem folgenden Schema:

Seien $v(p)$ die Messwertvektoren, insbesondere Frequenzmesswertvektoren, der Menge der Messwertvektoren, insbesondere Frequenzmesswertvektoren, mit p von 0 bis f-1 Seien $U(j)$ die Unterraummatrizen, jeweils mit k Frequenzmesswertvektoren, mit $k < f$ und $u = 0 \ldots k-1$ und $U(j,u)$ der u-te Frequenzmesswertvektoren der Unter-raummatrix $U(j)$

$$U(j,u) = v(j*A + C + u * B), \text{ und/oder } U(j,u) = v*((f-1) - (j*A + C + u * B))$$

und/oder

$$U(j,u) = -v((n-1) - (j*A + C + u * B))$$

wobei insbesondere B kein Teiler von A ist und/oder insbesondere alle $j * A <> u * B$ für alle j und u. j aus der Menge der positiven ganzen Zahlen läuft dabei insbesondere von 1 bis jmax mit jmax so gewählt, dass, $(j * A + C + u * B)$ immer $<= (f-1)$ ist.

Dabei ist v* die komplex Konjugierte von v.

Bevorzugt ist die Bildung einer ersten Teilmenge mit j von 1 bis jm nach

$$U(j,u) = v(j*A + C + u * B)$$

und einer zweiten, insbesondere von der Anzahl identischen, Teilmenge mit j von jm + 1 bis jmax nach

$$U(j,u) = v*((f-1) - (j*A + C + u * B)) \text{ oder } U(j,u) = -v((f-1) - (j*A + C + u * bB)),$$

wobei

$$-v = -Realteil(v) + i * (Imaginärteil(v)$$

Mit besonderem Vorteil weisen die die $U(j,u)$ zu den $U(j, u + 1)$ für alle j einen festen Betrag des Frequenzabstandes und/oder Betrag des Zeitabstandes der ihnen zugrunde liegenden Messungen am empfangenen Signal und/oder des Abstrahlens des Signals, an dem gemessen wurde, auf, der aber für jedes u unterschiedlich sein kann, also beispielsweise Delta_t(u) und/oder Delta_F(u) beträgt. Dies ist insbesondere bei stark bewegten System zur Erhöhung der Genauigkeit dienlich. Bei näherungsweise konstantem Abstand zwischen den Objekten und/oder näherungsweise konstanter Funkumgebung, verliert dies an Bedeutung. Beispielsweise ist bei identischen Zeitabständen und Frequenzabständen der Signale dies sogar mit jeweils konstantem Delta_t (= Zeitabtand) und Delta_F (= Frequenzschritt) gegeben. Dies macht die Auswahl der Messwertvektoren unter Erfüllung der vorteilhaften Auswahlbedingung besonders einfach. Wird mit Teilmengen der Unterraumvektoren gearbeitet (erster Teil , kann für die zweite Teilmenge auch gelten Delta_t(j | 1 ... jm, u) = - Delta_t(j|jm + 1 ... max, u) und/oder Delta_F(j| 1 ... jm, u) = - Delta_F(j|jm+ 1 ... max, u), wobei beispielsweise j| 1 ...jm bedeutet, dass j im Bereich 1 bis jm liegt.

Bevorzugt wird es, wenn die Messwertvektoren der Unterraummatrizen so ausgewählt sind, dass ein in einer Unterraummatrix gegebenes Zeit- und/oder Frequenzabstandsmuster zwischen den Messwertvektoren für alle Unterraummatrizen oder alle Unterraummatrizen der ersten Teilmenge, näherungsweise identisch, insbesondere identisch, ist und insbesondere das gleiche Muster, oder das gleiche Muster unter Umkehrung des Zeit- und/oder Frequenzabstandes auch für alle Unterraummatrizen der zweiten Teilmenge gilt, oder invertiert gilt. Als näherungsweise identisch gelten insbesondere Frequenzen mit einem Abstand von weniger als 500 kHz, insbesondere weniger als 100 kHz. Insbesondere werden die Frequenzen so gleich gemacht, dass das Produkt aus Zeitungenauigkeit der Bestimmung des Messzeitpunkts mit der Frequenzdifferenz weniger als 0,05 beträgt, was einem Phasenjitter von 18° entsprechen würde.

Mit besonderem Vorteil werden die Unterraummatrizen so gebildet, dass die Auswahlen der Messwertvektoren der Unterraummatrizen unterschiedlich sind, insbesondere jeder Messwertvektor nur in einer Unterraummatrix vorkommt. Dies reduziert bei dennoch relativ hoher Genauigkeit den Rechenaufwand.

Bevorzugt werden in den Koordinaten der Messwertvektoren, insbesondere in den f Zeilen oder f Spalten, jeweils die komplexen Messwerte von, insbesondere einer, Signalübermittlung oder von, insbesondere einem, Signalrundlauf, insbesondere bei einer Frequenz, aufgenommen.

Mit Vorteil weisen die erste und zweite Teilmenge jeweils gleiche Anzahl Unterraummatrizen auf. Dies macht die Berechnung besonders genau. Dabei sind sie insbesondere nicht aus den gleichen Frequenzmessewertvektoren gebildet sind. Die Bildung aus gleichen Frequenzmessewertvektoren schließt auch die Bildung, bei der in einer Unterraummatrix ein bestimmter Frequenzmessewertvektoren verwendet wird und bei einer anderen seine komplex konjugierter oder ein Produkt aus dem bestimmten Frequenzmessewertvektoren und einem Skalar, auch negativ, mit ein. Dies erhöht die Genauigkeit im Verhältnis zum Rechenaufwand.

Mit besonderem Vorteil sind die Unterraummatrizen der ersten Teilmenge und der zweiten Teilmenge nicht aus Messwerten von Messungen an der gleichen empfangenen Signalmenge gebildet, insbesondere beinhaltet die erste Teilmenge keine Frequenzmessewertvektoren, insbesondere, Messwerte an empfangenen Signalen, die die zweite Teilmenge beinhaltet, insbesondere sind die Frequenzmessewertvektoren, insbesondere Zeilen oder Spalten, aus denen die Unterraummatrizen der ersten Teilmenge gebildet sind, disjunkt zu den Frequenzmessewertvektoren, insbesondere Zeilen oder Spalten, ihren komplex konjugierten oder mit einem Skalar, auch negativ, multiplizierten Messwertvektoren, aus denen die Unterraummatrizen der zweiten Teilmenge gebildet sind. Dies erhöht die Genauigkeit im Verhältnis zum Rechenaufwand.

In manchen Ausgestaltungen oder Umgebungen kann es von großem Vorteil sein, wenn nicht alle Messwertvektoren, insbesondere Zeilen oder Spalten, in den Unterraummatrizen beinhaltet sind. Dabei werden insbesondere in Bezug auf den Zeitpunkt der Messung und/oder Abstrahlung des Signals, an dem gemessen wurde, und/oder in Bezug auf dessen Frequenz benachbarte Messwertvektoren zu in den Unterraummatrizen aufgenommenen Messwertvektoren nicht aufgenommen. So kann beispielsweise in einer Reihenfolge nach Zeit und/oder Frequenz jeder zweite Messwertvektor ausgelassen werden. Auch können solche Messwertvektoren ausgelassen werden, die an Signalen mit auffällig abweichender Empfangsenergie, Bandbreite und/oder Schwankung genommen wurden. Dadurch kann ohne größere Einbußen in Bezug auf die Genauigkeit der Rechenaufwand deutlich reduziert und teilweise sogar die Genauigkeit verbessert werden, insbesondere wenn durch die Auswahl besonders gestörte oder durch lange Signallaufwege dominierte Empfangssignale nicht verwendet werden.

Mit Vorteil kann die erste Unterraummatrix so gebildet werden, dass beginnend mit einem A-ten Messwertvektor alle B-ten oder eine vorbestimmte Anzahle B-ter Messwertvektoren in die Unterraummatrix aufgenommen werden und dies für alle Unterraummatrizen oder alle Unterraummatrizen der ersten Teilmenge wiederholt wird, wobei A um einen vorbestimmten Wert erhöht wird, wobei B insbesondere ungleich A ist und insbesondere B kein Teiler von A ist. A und B sind ganze Zahlen, insbesondere positiv.

Bevorzugt werden die Frequenzmessewertvektoren, insbesondere Zeilen oder Spalten, jeweils gebildet aus Messwerten an einem Funksignal, das von einem ersten zu einem zweiten Objekt bei einer Frequenz übertragen wurde oder aus Messwerten eines Signalrundlaufs gebildet sind, wobei insbesondere die durch die Übertragung, insbesondere Entfernung, zwischen den Objekten resultierende Phasenänderung bestimmt wird und/oder ein von der empfangenen Amplitude abhängiger Wert bestimmt wird und insbesondere die Messwerte durch komplexe Zahlen gegeben sind, insbesondere jeweils gebildet aus dem von der empfangenen Amplitude abhängigen Wert und der Phasenänderung. Bei einem Signalrundlauf sind die Frequenzen für Hin-und Rückweg insbesondere näherungsweise identisch. Für die Bestimmung von Frequenzabständen wird dann insbesondere ein Frequenzwert der einem der beiden Frequenzen entspricht oder eine Frequenz, die dazwischen liegt, verwendet.

Mit besonderem Vorteil, zur Verbesserung der Genauigkeit und der Reduktion des Rechenaufwands werden die Messwertvektoren, insbesondere Messwerte und/oder Messwertmatrix, insbesondere vor dem spatial smoothig, einer Filterung und/oder Glättung unterworfen. So kommt beispielsweise eine IIR Filter, ein FIR Filter und/oder eine FFT Analyse und das Entfernen hoher Frequenzanteile in Frage. Dies ist insbesondere zur Vermeidung von negativen Auswirkungen durch Rundungsfehler, insbesondere bei 32-Bit Floatingpoint-Zahlen, bei der Berechnung von Eigenvektoren und/oder Eigenwerten vorteilhaft.

Mit Vorteil werden zur Erhöhung der Genauigkeit verschiedene Antennenpfade zwischen den zwei Objekten genutzt, insbesondere wird jeder Frequenzmessewertvektoren aus Messwerten vom Empfang an unterschiedlichen Empfangsvorrichtungen, insbesondere Antennen, und/oder vom Empfang nach dem Aussenden mit unterschiedlichen Sendevorrichtungen, insbesondere Antennen, insbesondere des gleichen Funksignals, gebildet und/oder weist ein Erstes aus Zeilen und Spalten jeweils Messungen an einem empfangenen Funksignal, insbesondere bei einer Frequenz, auf und das Andere aus Zeilen und Spalten Messwerte der Übertragung mit unterschiedlichen Sende- und/oder Empfangsantennen auf, und/oder sind die Werte in der Messwertmatrix komplex und beinhalten sie insbesondere jeweils eine Aussage zur empfangenen Amplitude oder Leistung und zur empfangenen Phasenlage und/oder Phasenverschiebung.

Bevorzugt ist die Anzahl der Messwertvektoren in jeder Unterraummatrix um mindestens 30% geringer als f, insbesondere ist die Anzahl der Zeilen oder Spalten der Unterraummatrizen um mindestens 30% geringer gewählt als die der Messwertmatrix. Dadurch lässt sich der Rechenaufwand bei geringem Verlust, teilweise sogar Steigerung der Genauigkeit, reduzieren.

Aus der Autokorrelationsmatrix können Eigenvektoren und Eigenwerte berechnet werden. Es ist bekannt, an Hand der Eigenwerte Rauschen von Signal zu trennen. Auch weitere Analysen der oder mittels der AKM, beispielsweise auf Basis ihrer Inversen sind bekannt.

Auch kann die Autokorrelationsmatrix genutzt werden Signalanteile zu trennen, beispielsweise den Rauschanteil in der der Autokorrelationsmatrix zu reduzieren. Auch kann auf Basis mindestens einer Eigenwert- und/oder -vektorberechnung eine Festlegung eines Signalraums in der Autokorrelationsmatrix erfolgen, insbesondere in dem die Eigenvektoren der größten Eigenwerte als den Signalraum aufspannend angesehen werden. Wie viele Eigenvektoren man hier verwendet, kann beispielsweise auf einer absoluten oder relativen Vorgabe basieren oder aus dem Verhältnis der Werte der Eigenwerte abgeleitet werden. So können eine bestimmte vorgegebene Anzahl von Eigenvektoren verwendet werden, kann eine relative Anzahl vorgegeben sein und/oder kann auf Grund der Verteilung der Eigenwerte eine Anzahl bestimmt werden. Die Vorgaben können auch Mindest- und/oder Maximalanzahlen sein. So kann beispielsweise bei einer absoluten vorgegebenen Anzahl von 3 die Menge der Eigenvektoren verwendet werden, die zu den drei größten Eigenwerten gehören. Bei einer Mindestanzahl von 2 und einer Maximalanzahl von 10 und einer Vorgabe der Art, dass nur Eigenvektoren von Eigenwerten berücksichtigt werden, die nicht kleiner sind als 50% des wertes des nähst größeren Eigenwerts kann die Anzahl zwischen 2 und 10 schwanken, je nach Verteilung der Größe der Eigenwerte des zweitgrößten bis zehntgrößten Eigenwerts.

Es kann mit Testdaten oder Testvektoren gearbeitet werden, um die Entfernung und/oder andere Eigenschaften der Signalausbreitung abzuschätzen.

Es ist möglich, Textvektoren in den Signalraum und/oder einen Eigenvektorraum der Autokorrelationsmatrix zu projizieren und deren Länge im Signalraum zu bestimmen. Der Eigenvektorraum wird dabei bevorzugt aus den Eigenvektoren der Autokorrelationsmatrix mit den größten Eigenwerten gebildet. Die Auswahl der größten Eigenwerte kann beispielsweise anhand einer vorgegeben relativen oder absoluten Anzahl oder anhand der Verhältnisse der Werte der Eigenwerte untereinander bestimmt werden. Der in der Projektion längste Testvektor kann dann als der am besten zur tatsächlichen Signalausbreitung passendste angesehen werden und es können seine Eigenschaften, insbesondere Entfernung, als die des empfangenen Signals angenommen werden. Auch kann eine Mittelung oder Interpolation der Eigenschafteen einer Mehrzahl größter projizierter Testvektoren verwendet werden.

Bevorzugt beinhaltet das Verfahren die Berechnung und/oder Abschätzung mindestens einer Eigenschaft der Signalausbreitung, insbesondere Entfernung, auf Basis einer Projektion und/oder Multiplikation der Autorkorrelationsmatrix und/oder ihrer Inversen, insbesondere mit einer Arrayresponse und/oder Abstrahlcharakteristik. Dadurch können beispielsweise das oder die zur Autokorrelationsmatrix ähnlichste(n) Mitglieder der Arrayresponse ermittelt werden, die einer bestimmten Ausprägung von Eigenschaften, wie Entfernung, Orientierung und/oder Richtung zugeordnet sind, wodurch die Entfernung und/oder relative Orientierung oder die Richtung vom ersten zum zweiten Objekt bestimmbar ist. Dazu können Testwert- oder Vektoren (wie z.B. Array Response) verwendet werden, die das zu empfangene Signal bei gegebenen Ausbreitungsbedingungen beschreiben. Diese können im Rahmen einer Kalibrierung ermittelt oder auf Basis eines Modells errechnet sein. Beispielsweise können diese Testvektoren jeweils einzeln mit der Inversen der Autokorrelationsmatrix multipliziert werden und der kürzeste Vektor der Ergebnisse verwendet werden, um die Eigenschaft zu bestimmten, insbesondere als die, die dem Modell zugrunde liegt. Dabei können Testvektoren für unterschiedliche Entfernungen verwendet werden. Beispielsweise können diese Testvektoren jeweils einzeln mit dem Signalraum der Autokorrelationsmatrix multipliziert werden und der längste Vektor der Ergebnisse verwendet werden, um die Eigenschaft zu bestimmten, insbesondere als die, die dem Modell zugrunde liegt. Dabei können Testvektoren für unterschiedliche Entfernungen verwendet werden. Testvektoren weisen insbesondere alle die gleiche Länge auf oder es wird bei der Betrachtung der Länge nach der Multiplikation eine entsprechende Normierung durchgeführt.

Auch ist es möglich die Phasenverschiebungsdifferenz zwischen den/dem Signalanteile(n) mit größten/m Eigenwert(en) für die einzelnen Antennenpfade oder Empfangsantennen zu bestimmen und daraus eine Einfallsrichtung des Signals zu bestimmen, insbesondere unter der Annahme, dass die Reihenfolge der Größe der Eigenwerte der Signalanteile auf allen Antennenpfaden oder Empfangsantennen identisch ist. So kann über die Differenz der Phasenänderung und Kenntnis der Anordnung der Empfangsantennen die Einfallsrichtung geometrisch bestimmt werden, insbesondere in dem eine Zuordnung der Signalanteile zwischen den einzelnen Antennenpfaden auf Grund der relativen Größe oder Reihenfolge der Größen der Eigenwerte erfolgt.

Besonders vorteilhaft ist es, für die Erstellung der Unterraummatrizen, deren Autokorrelationsmatrix und/oder die Aufsummierung und/oder die Invertierung und/oder Multiplikation der Autokorrelationsmatrix oder ihrer Inversen jeweils mit einem Testvektor aus einer Mehrzahl Testvektoren mittels Floatingpointunit, insbesondere einem digitalen Signalprozessor, aufweisend eine solche, zu verwenden. Dies kann zu deutlichen Geschwindigkeitsgewinnen führen.

Weitere Vorteile und mögliche Ausgestaltungen der Erfindung sollen nun rein exemplarisch und nicht beschränkend an Hand von Beispielen und schematischen Figuren erläutert werden:

Beispielsweis kann bei der Übertragung von 199 Signalen, jeweils mit einem Zeitabstand von 10 ms und einem Frequenzabstand von je 500 Hz über vier Antennenpfade unter Verwendung jeweils zweier Sende- und zweier Empfangsantennen eine Messwertmatrix mit 200 Frequenzmesswertvektoren und jeweils vier komplexen Koordinaten gebildet werden, aus dem dann Unterraummatrizen gebildet werden. Es sind dann auch vier Antennenmesswertvektoren mit je 200 Koordinaten vorhanden/bildbar. Beim bekannten spatial smoothing würden die Unterraummatrizen, beispielsweise mit einer Größe von jeweils 24 Messwertvektoren wir folgt gebildet:

U(1): Frequenzmesswertvektoren 1-24

U(2): Frequenzmesswertvektoren 2-25

usw.

U(17): Frequenzmesswertvektoren 175-199

Erfindungsgemäß könnte wie folgt gebildet werden:

U(1): Frequenzmesswertvektoren 1, 5, 9, 13, usw. 93

U(2): Frequenzmesswertvektoren 3, 7, 11, 15 usw. 95

usw.

U(54): Frequenzmesswertvektoren 107, 111, 115 usw. 199

Daraus lässt sich erkennen, dass der Rechenaufwand deutlich reduziert werden kann. Es hat sich gezeigt, dass die Genauigkeit der Ermittlung der Eigenschaft in einem deutlich geringeren Ausmaß reduziert ist, je nach Rechengenauigkeit und Anzahl der Unterraummatrizen sogar steigen kann.

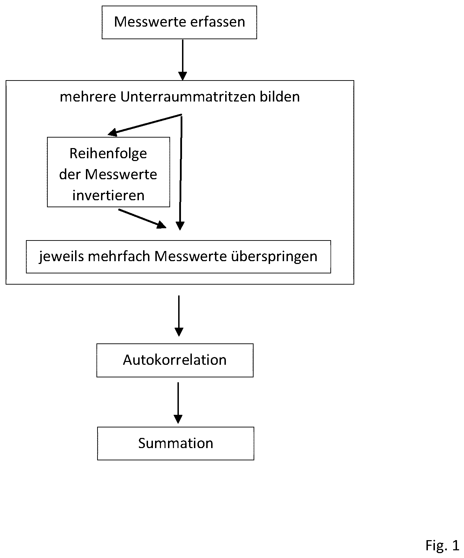

Fig. 1 veranschaulicht einen möglichen Ablauf. Nach dem Erfassen der Messwerte werden die Unterraummatrizen jeweils unter Auslassung durch mehrfaches Überspringen von Messwertvektoren und/oder unter Invertierung der Reihenfolge von Messwertvektoren gebildet. Diese werden mit sich selbst korreliert und die Ergebnisse werden aufsummiert.

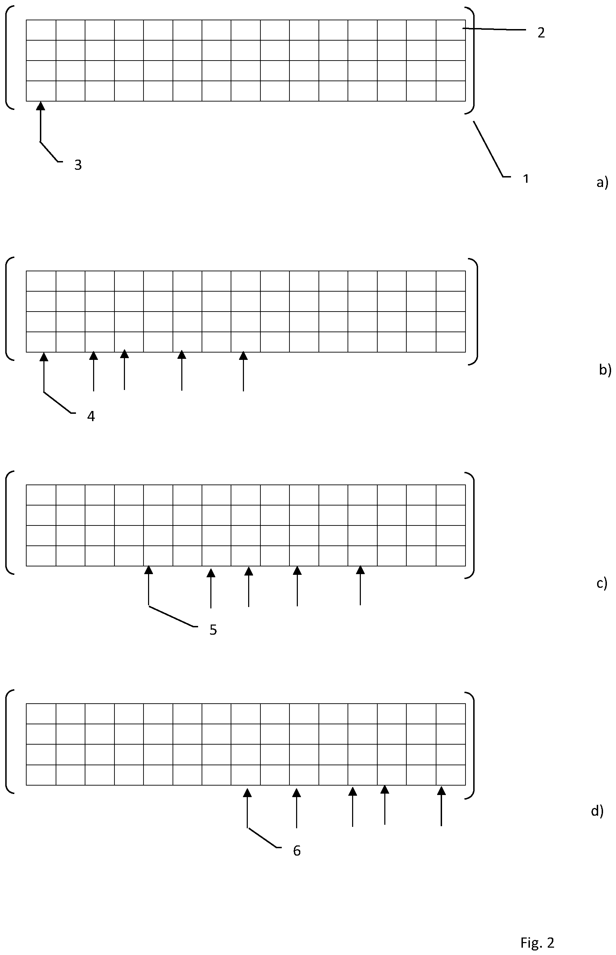

Fig. 2 a) veranschaulicht eine Messwertmatrix 1, deren komplexe Koordinaten als Kästchen dargestellt sind. Sie weist vier Antennenmesswertvektoren 2 für vier unterschiedliche Antennenpfade und fünfzehn Frequenzmesswertvektoren 3 auf. Dabei sind die Antennenmesswertvektoren 2 Zeilenvektoren und die Frequenzmesswertvektoren 3 Spaltenvektoren. Dies kann aber auch abweichend gewählt werden. Die Messwertmatrix 1 ist entstanden durch Messung von Amplitude und Phasenverschiebung an Signalen fünfzehn unterschiedlicher äquidistanter Frequenzen zu äquidistanten Zeitpunkten. In Fig. 2b) sind durch Peile die zur Bildung einer ersten Unterraummatrix ausgewählten Frequenzmesswertvektoren 4 gekennzeichnet. Fig. 2c) zeigt die für die Bildung einer zweiten Unterraummatrix ausgewählten Frequenzmesswertvektoren 5. Zu erkennen ist, dass das Muster der Frequenz- und Zeitabstände ihrer Messungen in beiden Auswahlen identisch ist. Fig. 2 d) zeigt die Auswahl der Frequenzmesswertvektoren 6 aus einer modifizierten, hier komplex konjugierten Matrix, zur Bildung einer dritten Unterraummatrix, bei der jedoch neben der komplexen Konjugation der Messwerte in der Unterraummatrix die Reihenfolge der Frequenzmesswertvektoren umgekehrt wird. Das bedeutet, dass die Reihenfolge der Frequenzmesswertvektoren 4 und 5 von links nach rechts gewählt wurde, während die Reichenfolge der Frequenzmesswertvektoren 6 von rechts nach links gewählt wurde. Die nach den Figuren 2 b, c und d gebildeten drei Unterraummatrizen werden jeweils einzeln mit sich selbst korreliert und dann alle aufsummiert, um die Autokorrelationsmatrix zu erhalten.

**Patentansprüche**

1. Verfahren zur Bestimmung mindestens einer Entfernung wobei es die Bereitstellung einer Autokorrelationsmatrix von Messwerten umfasst, aufweisend die Schritte

   a. Senden einer ersten Mehrzahl von Funksignalen von einem ersten Objekt auf unterschiedlichen ersten Frequenzen, insbesondere mit unterschiedlichen ersten Antennen des ersten Objekts, und Empfangen der ersten Mehrzahl von Funksignale an einem zweiten Objekt, insbesondere mit unterschiedlichen zweiten Antennen des zweiten Objekt, sowie optional auch Senden einer zweiten Mehrzahl von Funksignalen auf unterschiedlichen zweiten Frequenzen, insbesondere auf den unterschiedlichen ersten Frequenzen oder auf zu zu den ersten unterschiedlichen Frequenzen ähnlichen Frequenzen, insbesondere mit unterschiedlichen, insbesondere den zweiten, Antennen des zweiten Objekts, von dem zweiten Objekt und Empfangen der zweiten Mehrzahl von Funksignalen an dem ersten Objekt, insbesondere mit unterschiedlichen, insbesondere den ersten, Antennen des ersten Objekts.

   b. Bestimmen von Messwerten an den ersten und/oder zweiten empfangenen Funksignalen zur Bestimmung der Entfernung zwischen erstem und zweitem Objekt die die Funksignale zurückgelegt haben

   c. Bestimmen der Autokorrelationsmatrix,

      i. wobei dazu eine Menge von f, insbesondere komplexe, Frequenzmesswertvektoren (3) mit je a Koordinaten mit a > = 1 und mit f > 1, insbesondere mit f > 3, insbesondere f > 10, mit einer gegebenen Reihenfolge, insbesondere als eine komplexe Messwertmatrix (1), insbesondere mit a Zeilen und f Spalten oder a Spalten und f Zeilen, basierend auf den ersten und/oder zweiten Messwerten an den ersten und/oder zweiten Funksignalen bereitgestellt wird, wobei die Menge von f Frequenzmesswertvektoren insbesondere einen Messwertraum aufspannen, wobei ein Frequenzmesswertvektor jeweils aus Messungen an einem oder mehreren Signalen einer ersten und/oder zweiten Frequenz gebildet ist, wobei der Frequenzmesswertvektor bei einem Signallauf nur vom ersten zum zweiten Objekt durch Messungen an Signalen einer ersten Frequenz gebildet, bei einem Signalrundlauf aus Messungen an Signalen vom ersten zum zweiten Objekt bei einer ersten Frequenz und an Signalen vom zweiten zum ersten Objekt bei einer zweiten, ähnlichen, Frequenz gebildet ist.

      ii. und wobei dazu aus der Menge der f Frequenzmesswertvektoren (3), insbesondere aus der Messwertmatrix (1), mittels spatial smoothing die Autokorrelationsmatrix mit einer ersten Frequenzvektoranzahl (4, 5, 6) niedriger als f, insbesondere mit geringerer Spalten- und/oder Zeilenanzahl als die der Messwertmatrix (1), gebildet wird, wobei

         a. für die Durchführung des spatial smoothing eine dritte Mehrzahl von Unterraummatrizen der Menge der Frequenzmesswertvektoren, insbesondere der Messwertmatrix, mit jeweils einer, insbesondere der ersten, Frequenzmesswertvektoranzahl (4, 5, 6), insbesondere Spalten- oder Zeilenvektoranzahl, geringer als f, insbesondere geringerer Spalten- und/oder Zeilenanzahl als die der Messwertmatrix, gebildet wird und wobei die Unterraummatrizen jeweils mit sich selbst korreliert werden und die mit sich selbst korrelierten Unterraummatrizen, insbesondere gewichtet, aufsummiert werden,

            wobei das Verfahren die Bestimmung der mindestens einen Entfernung auf Basis mindestens einer Projektion und/oder Multiplikation mit der Autokorrelationsmatrix und/oder die Reduzierung des Rauschens in der Autokorrelationsmatrix und/oder das Auswählen eines Signalraums in der Autokorrelationsmatrix auf Basis mindestens einer Eigenwert-/-vektorberechnung beinhaltet,
            **dadurch gekennzeichnet, dass**
            die Bildung der Unterraummatrizen so erfolgt, dass

         b. jeweils eine Auswahl mit für alle Unterraummatrizen gleicher Anzahl, insbesondere einer, insbesondere der ersten, Frequenzmesswertvektoranzahl, in der gegebenen Reihenfolge zumindest teilweise, insbesondere jeweils, nicht benachbarter Frequenzesswertvektoren, insbesondere Zeilen oder Spalten der Messwertmatrix, eine Unterraummatrix bildet

         und/oder dass eine erste Teilmenge der Unterraummatrizen so gebildet wird, dass eine Unterraummatrix der ersten Teilmenge jeweils durch eine Auswahl mit für alle Unterraummatrizen gleicher Anzahl Frequenzmesswertvektoren (4, 5), insbesondere einer, insbesondere der ersten, Frequenzmesswertvektoranzahl, insbesondere Zeilen oder Spalten der Messwertmatrix, gebildet wird, wobei die Anordnung der ausgewählten Frequenzmesswertvektoren in der Unterraummatrix ist wie in der gegeben Reihenfolge und dass eine zweite Teilmenge der Unterraummatrizen so gebildet wird, dass eine Unterraummatrix der zweiten Teilmenge jeweils durch eine Auswahl mit für alle Unterraummatrizen gleicher Anzahl insbesondere einer, insbesondere der ersten, Frequenzmesswertvektoranzahl, modifizierter Frequenzmesswertvektoren (6) aus einer modifizierten Frequenzmesswertvektorenmenge, insbesondere modifizierten Messwertmatrix, gebildet wird und dass die modifizierte Frequenzmesswertvektorenmenge, insbesondere modifizierte Messwertmatrix, dadurch gebildet ist, dass Frequenzesswertvektoren ausgewählt und ihre Reihenfolge gegenüber der gegebenen Reihenfolge umgedreht werden und der komplexe oder der reale Anteil aller Koordinaten der modifizierten Messwertvektorenmenge invertiert wird, wobei die Anordnung der ausgewählten Frequenzmesswertvektoren in den Unterraummatrix der zweiten Teilmenge jeweils der umgedrehten Reihenfolge entspricht,

2. Verfahren nach Anspruch 1, wobei die Auswahlen der Frequenzmesswertvektoren der Unterraummatrizen unterschiedlich sind, insbesondere jeder Frequenzmesswertvektoren nur in einer Unterraummatrix vorkommt.

3. Verfahren nach einem der vorstehenden Ansprüche, wobei in den Koordinaten der Frequenzmesswertvektoren, insbesondere in den f Zeilen oder f Spalten, jeweils die komplexen Messwerte von, insbesondere einer, Signalübermittlung oder von, insbesondere einem, Signalrundlauf, insbesondere bei einer Frequenz, gegebenenfalls über mehrere Antennenpfade, aufgenommen sind.

4. Verfahren nach einem der vorstehenden Ansprüche, wobei erste und zweite Teilmenge jeweils gleiche Anzahl Unterraummatrizen aufweisen und insbesondere nicht aus den gleichen Messewertvektoren gebildet sind, insbesondere nicht aus Messwerten von Messungen an der gleichen empfangenen Signalmenge gebildet sind, insbesondere die erste Teilmenge keine Frequenzmesswertvektoren, insbesondere, Messwerte an empfangenen Signalen Frequenzen, beinhaltet, bei denen gemessene Signale die die zweite Teilmenge beinhaltet, insbesondere die Frequenzmesswertvektoren, insbesondere Zeilen oder Spalten, aus denen die Unterraummatrizen der ersten Teilmenge gebildet sind, disjunkt zu den Frequenzmesswertvektoren, insbesondere Zeilen oder Spalten, aus denen die Unterraummatrizen der zweiten Teilmenge gebildet sind, ist.

5. Verfahren nach einem der vorstehenden Ansprüche, wobei nicht alle Frequenzmesswertvektoren, insbesondere Zeilen oder Spalten, in den Unterraummatrizen beinhaltet sind.

6. Verfahren nach einem der vorstehenden Ansprüche, wobei die erste Unterraummatrix dadurch gebildet wird, dass beginnend mit einem A-ten Frequenzmesswertvektor alle B-ten oder eine vorbestimmte Anzahle B-ter Frequenzmesswertvektoren in die Unterraummatrix aufgenommen werden und dies für alle Unterraummatrizen oder alle Unterraummatrizen der ersten Teilmenge wiederholt wird, wobei A um einen vorbestimmten Wert erhöht wird, wobei b insbesondere ungleich A ist und insbesondere B kein Teiler von A ist.

7. Verfahren nach einem der vorstehenden Ansprüche, wobei die Frequenzmesswertvektoren der Unterraummatrizen so ausgewählt sind, dass ein in einer Unterraummatrix gegebenes Zeit- und/oder Frequenzabstandsmuster zwischen ihren Frequenzmesswertvektoren für alle Unterraummatrizen oder alle Unterraummatrizen der ersten Teilmenge, näherungsweise identisch, insbesondere identisch, ist und insbesondere das gleiche Muster, oder das gleiche Muster unter Umkehrung des Zeit- und/oder Frequenzabstandes auch für alle Unterraummatrizen der zweiten Teilmenge gilt.

8. Verfahren nach einem der vorstehenden Ansprüche, wobei die Frequenzmesswertvektoren, insbesondere Zeilen oder Spalten, jeweils gebildet sind aus Messwerten an einem Funksignal, das von einem ersten zu einem zweiten Objekt bei einer Frequenz übertragen wurde oder aus Messwerten eines Signalrundlaufs gebildet sind, wobei insbesondere die durch die Übertragung zwischen den Objekten resultierende Phasenänderung und/oder Signallaufzeit und/oder die aus der Signallaufzeit berechnete durch die Entfernung zwischen dem ersten und zweiten Objekt bedingte Phasenänderung bestimmt wird und/oder ein von der empfangenen Amplitude abhängiger Wert bestimmt wird und insbesondere die Messwerte durch komplexe Zahlen gegeben sind, insbesondere jeweils gebildet aus dem von dem empfangenen Amplitude abhängigen Wert und der Phasenänderung.

9. Verfahren nach einem der vorstehenden Ansprüche, wobei die Messwertvektoren, insbesondere Frequenzmesswertvektoren, Antennenmesswertvektoren, Messwerte und/oder Messwertmatrix, insbesondere vor dem spatial smoothig, einer Filterung und/oder Glättung unterworfen werden.

10. Verfahren nach einem der vorstehenden Ansprüche, wobei jeder Frequenzmesswertvektor aus Messwerten vom Empfang an unterschiedlichen Empfangsvorrichtungen und/oder vom Empfang nach dem Aussenden mit unterschiedlichen Sendevorrichtungen, insbesondere des gleichen Funksignals, gebildet ist und/oder ein Erstes aus Zeilen und Spalten jeweils Messungen an einem empfangenen Funksignal, insbesondere bei einer Frequenz, aufweist und das Andere aus Zeilen und Spalten Messwerte der Übertragung mit unterschiedlichen Sende- und/oder Empfangsantennen aufweist, und/oder die Werte in der Messwertmatrix, den Frequenzmesswertvektoren und/oder Antennenmesswertvektoren komplex sind und insbesondere jeweils eine Aussage zur empfangenen Amplitude oder Leistung und zur empfangenen Phasenlage beinhalten.

**11.** Verfahren nach einem der vorstehenden Ansprüche, wobei die Anzahl der Frequenzmesswertvektoren in jeder Unterraummatrix um mindestens 30% geringer ist als f, insbesondere die Anzahl der Zeilen oder Spalten der Unterraummatrizen um mindestens 30% geringer ist als die der Messwertmatrix.

**12.** Verfahren nach einem der vorstehenden Ansprüche, wobei es die Berechnung mindestens einer Entfernung auf Basis mindestens einer Projektion und/oder Multiplikation mit der Autokorrelationsmatrix ermittelt und/oder geschätzt wird und/oder die Reduzierung des Rauschens in der Autokorrelationsmatrix und/oder das Auswählen einer Signalraums in der Autokorrelationsmatrix auf Basis mindestens einer Eigenwert-/-vektorberechnung beinhaltet.

**13.** Verfahren nach einem der vorstehenden Ansprüche, wobei die Erstellung der Unterraummatrizen, deren Autokorrelationsmatrix und/oder die Aufsummierung und/oder die Invertierung und/oder Multiplikation der Autokorrelationsmatrix oder ihrer Inversen jeweils mit einem Testvektor aus einer Mehrzahl Testvektoren mittels Floatingpointunit, insbesondere einem digitalen Signalprozessor, aufweisend eine Floatingpointunit, durchgeführt wird.

**Claims**

**1.** A method for determining at least one distance, comprising providing an autocorrelation matrix of measured values, comprising the steps of

a. Transmitting a first plurality of radio signals from a first object at different first frequencies, in particular with different first antennas of the first object, and receiving the first plurality of radio signals at a second object, in particular with different second antennas of the second object, and optionally also transmitting a second plurality of radio signals at different second frequencies, in particular on the different first frequencies or on frequencies similar to the first different frequencies, in particular with different, in particular the second, antennas of the second object, from the second object and receiving the second plurality of radio signals at the first object, in particular with different, in particular the first, antennas of the first object.
b. Determining measured values on the first and/or second received radio signals to determine the distance travelled by the radio signals between the first and second objects
c. Determine the autocorrelation matrix,

i. wherein for this purpose a set of f, in particular complex, measured frequency value vectors (3) each having a coordinates with a > = 1 and with f > 1, in particular with f > 3, in particular f > 10, with a given sequence, in particular as a complex measured value matrix (1), in particular with a rows and f columns or a columns and f rows, based on the first and/or second measured values on the first and/or second radio signals, wherein the set of f measured frequency value vectors in particular spans a measured value space, wherein a measured frequency value vector is formed in each case from measurements on one or more signals of a first and/or second frequency, wherein the measured frequency value vector is formed by measurements on signals of a first frequency in the case of a signal run only from the first to the second object, and is formed by measurements on signals from the first to the second object at a first frequency and on signals from the second to the first object at a second, similar, frequency in the case of a signal round trip.
ii. and wherein for this purpose the autocorrelation matrix with a first frequency vector number (4, 5, 6) lower than f, in particular with a lower number of columns and/or rows than that of the measured value matrix (1), is formed from the set of f measured frequency value vectors (3), in particular from the measured value matrix (1), by means of spatial smoothing, wherein

a. for performing the spatial smoothing, a third plurality of subspace matrices of the set of measured frequency value vectors, in particular of the measured value matrix, is formed with in each case one, in particular the first, number of measured frequency value vectors (4, 5, 6), in particular number of column or row vectors, lower than f, in particular lower number of columns and/or rows than that of the measured value matrix, and wherein the subspace matrices are in each case correlated with themselves and the subspace matrices correlated with themselves are totalled, in particular weighted,

wherein the method comprises determining said at least one distance on the basis of at least one projection and/or multiplication with the autocorrelation matrix and/or reducing the noise in the autocorrelation matrix and/or selecting a signal space in the autocorrelation matrix on the basis of at least one eigenvalue/vector calculation,
**characterised in that**
the subspace matrices are formed in such a way that

b. in each case a selection with the same number for all subspace matrices, in particular one, in particular the first, number of measured frequency value vectors, forms a subspace matrix in the given sequence at least partially, in particular in each case, of non-adjacent measured frequency value vectors, in particular rows or columns of the measured value matrix
and/or that

a first subset of the subspace matrices is formed in such a way that a subspace matrix of the first subset is formed in each case by a selection with the same number of measured frequency value vectors (4, 5) for all subspace matrices, in particular one, in particular the first, number of frequency-measured value vectors, in particular rows or columns of the measured value matrix, the arrangement of the selected measured frequency value vectors in the subspace matrix being as in the given sequence, and **in that** a second subset of the subspace matrices is formed in such a way that a subspace matrix of the second subset is formed in each case by a selection with the same number of measured frequency value vectors, in particular one, in particular the first, for all subspace matrices, in particular the first, number of measured frequency value vectors, of modified measured frequency value vectors (6) from a modified measured frequency value vector set, in particular modified measured value matrix, and **in that** the modified measured frequency value vector set, in particular modified measured value matrix, is formed thereby, **in that** measured frequency value vectors are selected and their order is reversed with respect to the given order and the complex or the real component of all coordinates of the modified measured value vector set is inverted, the arrangement of the selected measured frequency value vectors in the subspace matrix of the second subset corresponding in each case to the reversed order,

2. Method according to claim 1, wherein the selections of the measured frequency value vectors of the subspace matrices are different, in particular each measured frequency value vector only occurs in one subspace matrix.

3. Method according to one of the preceding claims, wherein in the coordinates of the measured frequency value vectors, in particular in the f rows or f columns, in each case the complex measured values of, in particular one, signal transmission or of, in particular one, signal round trip, in particular at one frequency, optionally via several antenna paths, are recorded.

4. Method according to one of the preceding claims, wherein the first and second subsets each have the same number of subspace matrices and in particular are not formed from the same measured value vectors, in particular are not formed from measured values of measurements on the same received signal set, in particular the first subset does not include any measured frequency value vectors, in particular, measured values on received signal frequencies, in which measured signals which the second subset contains, in particular the measured frequency value vectors, in particular rows or columns, from which the subspace matrices of the first subset are formed, are disjoint from the measured frequency value vectors, in particular rows or columns, from which the subspace matrices of the second subset are formed.

5. Method according to one of the preceding claims, wherein not all measured frequency value vectors, in particular rows or columns, are included in the subspace matrices.

6. Method according to one of the preceding claims, wherein the first subspace matrix is formed in that, starting with an A-th measured frequency value vector, all B-th (or a predetermined number B-th) measured frequency value vectors are included in the subspace matrix and this is repeated for all subspace matrices or all subspace matrices of the first subset, wherein A is increased by a predetermined value, wherein b is in particular not equal to A and in particular B is not a divisor of A.

7. Method according to one of the preceding claims, wherein the measured frequency value vectors of the subspace matrices are selected such that a time and/or frequency spacing pattern given in a subspace matrix between their measured frequency value vectors is approximately identical, in particular identical, for all subspace matrices or all subspace matrices of the first subset, and in particular the same pattern, or the same pattern with reversal of the time and/or frequency spacing, also applies to all subspace matrices of the second subset.

8. Method according to one of the preceding claims, wherein the measured frequency value vectors, in particular rows or columns, are each formed from measured values on a radio signal which was transmitted from a first to a second object at a frequency or are formed from measured values of a signal round trip, wherein in particular the phase change and/or signal propagation time resulting from the transmission between the objects and/or the phase change calculated from the signal propagation time due to the distance between the first and second object is determined and/or a value dependent on the received amplitude is determined and in particular the measured values are given by complex numbers, in particular formed in each case from the value dependent on the received amplitude and the phase change.

9. Method according to one of the preceding claims, wherein the measured value vectors, in particular measured frequency value vectors, antenna measured value vectors, measured values and/or measured value matrix are subjected to filtering and/or smoothing, in particular before the spatial smoothing.

10. Method according to one of the preceding claims, wherein each measured frequency value vector is formed from measured values from reception at different receiving devices and/or from reception after transmission with different transmitting devices, in particular of the same radio signal, and/or a first one of rows and columns in each case comprises measurements on a received radio signal, in particular at one frequency, and the other one of rows and columns comprises measured values of the transmission with different transmitting and/or receiving antennas, and/or the values in the measured value matrix, the measured frequency value vectors and/or antenna measured value vectors and/or antenna measured value in particular at a frequency, and the other of rows and columns has measured values of the transmission with different transmitting and/or receiving antennas, and/or the values in the measured value matrix, the measured frequency value vectors and/or antenna measured value vectors are complex and in particular each contain a statement on the received amplitude or power and on the received phase position.

11. Method according to one of the preceding claims, wherein the number of measured frequency value vectors in each subspace matrix is at least 30% less than f, in particular the number of rows or columns of the subspace matrices is at least 30% less than that of the measured value matrix.

12. Method according to any one of the preceding claims, wherein it comprises calculating at least one distance determined and/or estimated based on at least one projection and/or multiplication with the autocorrelation matrix and/or reducing noise in the autocorrelation matrix and/or selecting a signal space in the autocorrelation matrix based on at least one eigenvalue/vector calculation.

13. Method according to one of the preceding claims, wherein the creation of the subspace matrices, their autocorrelation matrix and/or the summation and/or the inversion and/or multiplication of the autocorrelation matrix or its inverse is carried out in each case with a test vector from a plurality of test vectors by means of a floating-point unit, in particular a digital signal processor having a floating-point unit.

**Revendications**

1. Procédé de détermination d'au moins une distance, comprenant la fourniture d'une matrice d'autocorrélation de valeurs de mesure, comprenant les étapes suivantes

   a. Émettre une première pluralité de signaux radio à partir d'un premier objet à différentes premières fréquences, en particulier avec différentes premières antennes du premier objet, et recevoir la première pluralité de signaux radio à un second objet, en particulier avec différentes secondes antennes du second objet, et éventuellement aussi transmettre une seconde pluralité de signaux radio à différentes secondes fréquences, en particulier sur les premières fréquences différentes ou sur des fréquences similaires aux premières fréquences différentes, en particulier avec des antennes différentes, en particulier les secondes antennes du second objet, à partir du second objet et en recevant la seconde pluralité de signaux radio sur le premier objet, en particulier avec des antennes différentes, en particulier les premières antennes du premier objet.

b. Déterminer des valeurs de mesure sur les premiers et/ou seconds signaux radio reçus pour déterminer la distance parcourue par les signaux radio entre le premier objet et le second objet.

c. Déterminer la matrice d'autocorrélation,

i. dans lequel, à cette fin, un ensemble de vecteurs de valeurs de mesure de fréquence f, en particulier complexes (3), ayant chacun des coordonnées avec a > = 1 et avec f > 1, en particulier avec f > 3, en particulier f > 10, avec une séquence donnée, en particulier sous la forme d'une matrice de valeurs de mesure complexes (1), en particulier avec a rangées et f colonnes ou a colonnes et f rangées, sur la base des premières et/ou secondes valeurs de mesure sur les premiers et/ou secondes signaux radio, l'ensemble de f vecteurs de valeurs de mesure de fréquence couvrant en particulier un espace de valeurs de mesure, un vecteur de valeurs de mesure de fréquence étant formé dans chaque cas à partir de mesures sur un ou plusieurs signaux d'une première et/ou d'une seconde fréquence, dans lequel le vecteur de valeurs de mesure de fréquence est constitué de mesures sur des signaux d'une première fréquence dans le cas d'un signal allant uniquement du premier au second objet, et est constitué de mesures sur des signaux allant du premier objet au second objet à une première fréquence et sur des signaux allant du second objet au premier objet à une seconde fréquence similaire dans le cas d'un aller-retour du signal.

ii. et dans lequel, à cette fin, la matrice d'autocorrélation avec un premier nombre de vecteurs de fréquence (4, 5, 6) inférieur à f, en particulier avec un nombre de colonnes et/ou de rangées inférieur à celui de la matrice des valeurs de mesure (1), est formée à partir de l'ensemble des vecteurs de valeurs de mesure de fréquence f (3), en particulier de la matrice des valeurs de mesure (1), au moyen d'un lissage spatial, dans lequel

a. pour effectuer le lissage spatial, une troisième pluralité de matrices de sous-espace de l'ensemble des vecteurs de valeurs de mesure de fréquence, en particulier de la matrice de valeurs de mesure, est formée avec dans chaque cas un, en particulier le premier, nombre de vecteurs de valeurs de mesure de fréquence (4, 5, 6), en particulier le nombre de vecteurs de colonnes ou de rangées, inférieur à f, en particulier un nombre de colonnes et/ou de rangées inférieur à celui de la matrice des valeurs de mesure, et dans lequel les matrices de sous-espace sont dans chaque cas corrélées avec elles-mêmes et les matrices de sous-espace corrélées avec elles-mêmes sont totalisées, en particulier pondérées,

le procédé consiste à déterminer ladite au moins une distance sur la base d'au moins une projection et/ou d'une multiplication avec la matrice d'autocorrélation et/ou à réduire le bruit dans la matrice d'autocorrélation et/ou à sélectionner un espace de signal dans la matrice d'autocorrélation sur la base d'au moins un calcul de valeur/vecteur propre,

**caractérisé par le fait que**

les matrices du sous-espace sont formées de telle sorte que

b. dans chaque cas, une sélection avec le même numéro pour toutes les matrices de sous-espace, en particulier un, en particulier le premier, nombre de vecteurs de valeurs de mesure de fréquence, forme une matrice de sous-espace dans la séquence donnée au moins partiellement, en particulier dans chaque cas, de vecteurs de valeurs de mesure de fréquence non adjacents, en particulier des rangées ou des colonnes de la matrice de valeurs de mesure

et/ou que

un premier sous-ensemble des matrices du sous-espace est formé de telle sorte qu'une matrice du sous-espace du premier sous-ensemble est formée dans chaque cas par une sélection avec le même nombre de vecteurs de valeurs de mesure de fréquence (4, 5) pour toutes les matrices du sous-espace, en particulier un, en particulier le premier, nombre de vecteurs de valeurs de mesure de fréquence, en particulier des rangées ou des colonnes de la matrice de valeurs de mesure, la disposition des vecteurs de valeurs de mesure de fréquence sélectionnés dans la matrice du sous-espace est conforme à la séquence donnée, et un second sous-ensemble des matrices du sous-espace est formé de telle sorte qu'une matrice du sous-espace du second sous-ensemble est formée dans chaque cas par une sélection comportant le même nombre de vecteurs de valeurs de mesure de fréquence, en particulier un, en particulier le premier, pour toutes les matrices de sous-espace, en particulier la première, de vecteurs de valeurs de mesure de fréquence modifiés (6) provenant d'un ensemble de vecteurs de valeurs de mesure de fréquence modifiés, en particulier d'une matrice de valeurs de mesure modifiée, et que l'ensemble de vecteurs de valeurs de mesure de fréquence modifiés, en particulier la matrice de valeurs de mesure modifiée, est ainsi formé, les vecteurs de valeurs de mesure de fréquence sont sélectionnés et leur ordre est inversé par rapport à l'ordre donné et la composante complexe ou réelle de toutes les coordonnées de l'ensemble de vecteurs de valeurs de mesure modifié est inversée, la disposition des vecteurs de valeurs de mesure de fréquence sélectionnés dans la matrice du sous-espace du second sous-ensemble correspondant dans chaque cas à l'ordre inversé,

2. Procédé selon la revendication 1, dans lequel les sélections des vecteurs de valeurs de mesure de fréquence des matrices de sous-espace sont différentes, en particulier chaque vecteur de valeurs de mesure de fréquence n'apparaît que dans une seule matrice de sous-espace.

3. Procédé selon l'une des revendications précédentes, dans lequel les coordonnées des vecteurs de valeurs de mesure de la fréquence, en particulier dans les f rangées ou f colonnes, enregistrent dans chaque cas les valeurs de mesure complexes d'une transmission de signal ou d'un aller-retour de signal, en particulier à une fréquence, éventuellement via plusieurs trajets d'antenne.

4. Procédé selon l'une des revendications précédentes, dans lequel le premier sous-ensemble et le second sous-ensemble ont chacun le même nombre de matrices de sous-espace et en particulier ne sont pas formés à partir des mêmes vecteurs de valeurs de mesure, en particulier ne sont pas formés à partir de valeurs de mesure de mesures sur le même ensemble de signaux reçus, en particulier le premier sous-ensemble ne comprend pas de vecteurs de valeurs de mesure de fréquence, en particulier, les valeurs de mesure sur les fréquences des signaux reçus, dans lesquels les signaux mesurés que le seconde sous-ensemble contient, en particulier les vecteurs de valeurs de mesure de fréquence, en particulier les rangées ou les colonnes, à partir desquels les matrices du sous-espace du premier sous-ensemble sont formées, sont disjoints des vecteurs de valeurs de mesure de fréquence, en particulier les rangées ou les colonnes, à partir desquels les matrices du sous-espace du second sous-ensemble sont formées.

5. Procédé selon l'une des revendications précédentes, dans laquelle tous les vecteurs de valeurs de mesure de fréquence, en particulier les rangées ou les colonnes, ne sont pas inclus dans les matrices du sous-espace.

6. Procédé selon l'une des revendications précédentes, dans laquelle la première matrice du sous-espace est formée de telle sorte que, à partir d'un A-ième vecteur de valeur de mesure de fréquence, tous les B-ièmes vecteurs de valeur de mesure de fréquence ou un nombre prédéterminé de B-ièmes vecteurs de valeur de mesure de fréquence sont inclus dans la matrice du sous-espace et ceci est répété pour toutes les matrices du sous-espace ou toutes les matrices du sous-espace du premier sous-ensemble, dans lequel A est augmenté d'une valeur prédéterminée, dans lequel b n'est en particulier pas égal à A et en particulier B n'est pas un diviseur de A.

7. Procédé selon l'une des revendications précédentes, dans lequel les vecteurs de valeurs de mesure de fréquence des matrices de sous-espace sont sélectionnés de telle sorte qu'un modèle d'espacement temporel et/ou fréquentiel donné dans une matrice de sous-espace entre leurs vecteurs de valeurs de mesure de fréquence soit approximativement identique, en particulier identique, pour toutes les matrices de sous-espace ou toutes les matrices de sous-espace du premier sous-ensemble, et en particulier le même modèle, ou le même modèle avec inversion de l'espacement temporel et/ou fréquentiel, s'applique également à toutes les matrices de sous-espace du second sous-ensemble.

8. Procédé selon l'une des revendications précédentes, dans lequel les vecteurs de valeurs de mesure en fréquence, en particulier les rangées ou les colonnes, sont chacun formés à partir de valeurs de mesure sur un signal radio qui a été transmis d'un premier objet à un second objet à une fréquence ou sont formés à partir de valeurs de mesure d'un aller-retour du signal, dans lequel on détermine notamment le changement de phase et/ou le temps de propagation du signal résultant de la transmission entre les objets et/ou le changement de phase calculé à partir du temps de propagation du signal dû à la distance entre le premier et le second objet et/ou une valeur dépendant de l'amplitude reçue et dans lequel les valeurs de mesure sont données par des nombres complexes, notamment formés dans chaque cas à partir de la valeur fonction de l'amplitude reçue et du changement de phase.

9. Procédé selon l'une des revendications précédentes, dans lequel les vecteurs de valeurs de mesure, en particulier les vecteurs de valeurs de mesure de fréquence, les vecteurs de valeurs de mesure d'antenne, les valeurs de mesure et/ou la matrice de valeurs de mesure sont soumis à un filtrage et/ou à un lissage, en particulier avant le lissage spatial.

10. Procédé selon l'une des revendications précédentes, dans lequel chaque vecteur de valeurs de mesure de fréquence est formé à partir de valeurs de mesure provenant de la réception sur différents dispositifs de réception et/ou de la réception après émission avec différents dispositifs de transmission, en particulier du même signal radio, et/ou une première rangée et une première colonne comprennent dans chaque cas des mesures sur un signal radio reçu, en particulier à une fréquence, et l'autre rangée et l'autre colonne comprennent des valeurs de mesure de l'émission avec différentes antennes d'émission et/ou de réception, et/ou les valeurs de la matrice des valeurs de mesure, les vecteurs de valeurs de mesure de fréquence et/ou les vecteurs de valeurs de mesure d'antenne et/ou les valeurs de mesure d'antenne, en particulier à une fréquence, et l'autre des rangées et colonnes comporte des valeurs de mesure de l'émission avec différentes antennes d'émission et/ou de réception, et/ou les valeurs de la matrice des valeurs de mesure, les vecteurs de valeurs de mesure de fréquence et/ou les vecteurs de valeurs de mesure d'antenne sont complexes et contiennent en particulier chacun une indication sur l'amplitude ou la puissance reçue et sur la position de phase reçue.

11. Procédé selon l'une des revendications précédentes, dans lequel le nombre de vecteurs de valeurs de mesure de fréquence dans chaque matrice de sous-espace est inférieur d'au moins 30 % à f, en particulier le nombre de rangées ou de colonnes des matrices de sous-espace est inférieur d'au moins 30 % à celui de la matrice de valeurs de mesure.

12. Procédé selon l'une quelconque des revendications précédentes, comprenant le calcul d'au moins une distance déterminée et/ou estimée sur la base d'au moins une projection et/ou d'une multiplication avec la matrice d'autocorrélation et/ou la réduction du bruit dans la matrice d'autocorrélation et/ou la sélection d'un espace de signal dans la matrice d'autocorrélation sur la base d'au moins un calcul de valeur/vecteur propre.

13. Procédé selon l'une des revendications précédentes, dans lequel la formation des matrices de sous-espace, de leur matrice d'autocorrélation et/ou la sommation et/ou l'inversion et/ou la multiplication de la matrice d'autocorrélation ou de son inverse est effectuée dans chaque cas avec un vecteur d'essai d'une pluralité de vecteurs d'essai au moyen d'une unité à virgule flottante, en particulier un processeur de signaux numériques doté d'une unité à virgule flottante.

Fig. 1

Fig. 2

**IN DER BESCHREIBUNG AUFGEFÜHRTE DOKUMENTE**

**In der Beschreibung aufgeführte Patentdokumente**

• WO 2022096509 A1

**In der Beschreibung aufgeführte Nicht-Patentliteratur**

• **AVI ABU**. An Improved Spatial Smoothing Technique for DoA Estimation of Highly Correlated Signals. *Engineering Letters*, 10 February 2011, vol. 19 (1)